(19) Europäisches Patentamt
European Patent Office
Office européen des brevets

(11) **EP 1 768 041 B1**

(12) **EUROPEAN PATENT SPECIFICATION**

(45) Date of publication and mention
of the grant of the patent:
**13.04.2016   Bulletin 2016/15**

(51) Int Cl.:
***G06F 19/00*** *(2011.01)*

(21) Application number: **06019868.6**

(22) Date of filing: **22.09.2006**

(54) **Brain tissue classification**

Klassifikation von Gehirngewebe

Classification de tissue cerebral

(84) Designated Contracting States:
**DE FR GB IT**

(30) Priority: **22.09.2005   EP 05020672**

(43) Date of publication of application:
**28.03.2007   Bulletin 2007/13**

(73) Proprietor: **Brainlab AG**
**85622 Feldkirchen (DE)**

(72) Inventors:
• **Hartlep, Andreas**
**83629 Naring (DE)**

• **Pedain, Christoph**
**81667 München (DE)**
• **Brady, Martin**
**Baltimore, MD 21210 (US)**
• **Raghavan, Raghu**
**Phoenix, MD 21131 (US)**

(74) Representative: **Schwabe - Sandmair - Marx**
**Patentanwälte**
**P.O. Box 86 02 45**
**81629 München (DE)**

(56) References cited:
EP-A- 1 253 557        US-A1- 2003 169 914
US-A1- 2004 264 752    US-B2- 6 895 107

**Description**

The present invention relates to a method and an apparatus for image processing for surface delineation, especially for detecting the boundaries between brain tissue and cerebrospinal fluid (CSF) filled regions to classify the brain tissue. A purpose of this invention is to automatically detect and delineate boundaries between brain tissue and cerebrospinal fluid (CSF) filled regions, especially in medical or MRI images.

Especially the invention relates to a method of medical image processing to automatically classify the major tissue types, white matter (WM), gray matter (GM), and cerebro-spinal fluid (CSF), particularly using images generated by magnetic resonance imaging (MRI). Noise, limited resolution, limited contrast between tissue types, inhomogeneities in the measurement device, and tissue variation can complicate this problem. The invention improves contrast and reduces inhomogeneities by combining data from two or more similar data sets, varying at least one acquisition parameter to obtain different tissue contrast in the different volumes. The methods for choosing the acquisition parameters and for combining the images are elements of the invention. The classification method is further optimized by adjusting the volume signal levels so that the classification boundaries tend to lie on edges in the original image.

Tissue-CSF boundaries occur primarily at the outer cortical surface and in the interior of the brain at the CSF-filled ventricles. Locating these surfaces is of great importance in some neurosurgical procedures, such as convection-enhanced drug delivery, because the placement of infusion catheters too close to tissue-CSF boundaries is known to lead to poor distribution of the infusate into tissue, as the infusate flows into the less-resistive CSF-filled regions.

Large CSF-filled structures are easily distinguished from brain tissue in many MRI imaging sequences. But at the cortical surface, thin sulci are often narrower than the resolution of the MR imagery, and are thus not reliably detected.

Furthermore, the problem is complicated by brain pathologies. In particular, edema in the white matter can greatly alter the signal levels, making it difficult to separate from other tissues.

A common approach to tissue classification is to assign a label to each voxel, identifying it as WM, GM, or CSF, based on the voxel's signal level. Threshold levels separating the tissues can be obtained from user input or estimated from the image histogram. Other methods use different representations to attempt to more accurately identify the surfaces that separate the three categories. Deformable surface models describe the interface either as a parameterized mesh of triangles (see, e.g. M. Kass, A. Witkin, and D. Terzopoulos, "Snakes: Active Contour Models," Intl. J. Compo Vision, v. 1, pp. 312-333, 1988), or using level set methods, where the zero level set implicitly defines the boundary (X. Zeng, L.H. Staib, R.T. Shultz, and J.S. Duncan, "Segmentation and Measurement of the Cortex from 3D MR Images Using Coupled Surfaces Propagation," IEEE Trans. Med. Imaging, v. 18, pp. 100-111, 1999). Deformable surface models can represent partial voxels, but are generally complicated to implement and compute-intensive to run.

Brain tissue classification methods that use MRI data as input face two major difficulties, variation in signal response and structures that are smaller than the sampling rate. These issues are described below.

The MRI data used for brain tissue classification often contain some amount of artifact or distortion due to inhomogeneities in the radio frequency (RF) fields and magnetic susceptibility variations in the tissue being imaged. These effects give rise to small variations in the signal intensity that depend on the position of the sample location. These types of distortions are usually modeled as a multiplicative slowly-varying 'gain' field that modifies the signal expected signal values, i.e., $\mathbf{M}(x,y,z) = \mathbf{G}(x,y,z) \times \mathbf{I}(x,y,z)$, where $\mathbf{M}$ denotes the measured signal, $\mathbf{I}$ is the undistorted signal, $\mathbf{G}$ represents the gain field, and "x" denotes an element-wise product. $\mathbf{G}$ is a low frequency field with values near unity. The intensity normalization step attempts to estimate the gain field and use it to restore the undistorted image.

A simple filtering method is often used to estimate $\mathbf{G}$. A three-dimensional low-pass filter with a wide window is applied to the image. Mean, median, and Gaussian filters have been used for this purpose. The low-pass result is used to estimate the gain field.

The normalization problem is sometimes converted into the estimation of an additive 'bias' field $\mathbf{B} = \log(\mathbf{G})$ by taking the logarithm of the expression. W.M. Wells, W.E. Grimson, R. Kikinis, F.A. Jolesz, "Adaptive Segmentation of MRI Data," IEEE Trans. Med Imaging, v. 15, pp. 429-442, 1996 suggested this approach, and an expectation maximization approach to solve it. In this method, normalization and tissue classification are combined. A statistical classification is performed, followed by bias field estimation using the classification results, and then the estimated bias is removed. These steps are iterated to converge on a normalized classification. Many variations of this strategy have been proposed. The difficulties with this method are that they are complicated to implement and relatively time-consuming to perform.

The second difficulty, structures too small to be detected at MRI resolution, occurs frequently at the cortical surface. Sufficiently large CSF-filled structures in the brain are usually easy to distinguish by their signal level alone. But the outer surface of the cortex, a GM-CSF boundary, has a complex geometry in which the CSF regions can be obscured. The topology is that of a highly folded sheet of gray matter about three millimeters thick. The CSF-filled space between the inner folds (sulci) may be very thin relative to the MRI resolution and thus is not always directly visible in typical MRI data. A sulcus may appear in MRI as a continuous region of gray matter.

Knowledge of the brain's topology is often used in cortical surface finding algorithms in order to locate thin sulci that are not directly visible. The inner cortical GM-WM boundary is more easily located, as the white matter structures inside the gyri are usually thick enough to be detected. Therefore, one can locate the cortical GM-WM boundary, and then use this information to help locate the GM-CSF boundary. X. Zeng, L.H. Staib, R.T. Shultz, and J.S. Duncan, "Segmentation and Measurement of the Cortex from 3D MR Images Using Coupled Surfaces Propagation," IEEE Trans. Med. Imaging, v. 18, pp. 100-111, 1999, developed a level set method for segmenting the cortex that simultaneously evolves a couples pair of surfaces, one seeking the WM-GM cortical boundary and the other seeking the outer GM-CSF cortical surface. An additional constraint forces the two implicit surfaces to remain about three millimeters apart.

The coupled boundary level set approach has difficulty representing a pair of GM-CSF boundaries that are separated by less than the voxel resolution. X. Han, C. Xu, D. Tosun, and J. Prince, "Cortical Surface Reconstruction Using a Topology Preserving Geometric Deformable Model," 5th IEEE Workshop on Math. Methods in Bio. Image Anal., Kauai, HI, pp. 213-220, Dec. 2001 propose a modified topology-preserving level set method to find the WM-GM cortical boundary only. They then compute the 'skeleton' of the cortical gray matter, which locates regions that are maximally distant from the WM-GM boundary on the GM side. This method locates the central plane within sulci well. The skeleton regions are then marked as cortical surface. This method performs well at locating the cortical surface, but the level set approach for locating the GM-WM boundary is compute-intensive, considering that the WM-GM interface is amenable to simpler classification methods, such as thresholding.

EP 1 253 557 A1 discloses a digital x-ray-imaging system for generating a digital data set which provides an enhanced information image having improved contrast information. Images at different exposal levels may be obtained by either generating the digital data sets at different times throughout a signal illumination period or by generating the data sets during separate illuminations with illuminating beams of different beam fluxes but same energy.

US 2003/0169914 A1 discloses a method and system for processing vascular radiography images which have been reconstructed by three-dimensional modelling, in which: from this three-dimensional modelling there is determined a three-dimensional model known as the masked model which features the calcified elements and the prosthetic elements, but not the vascular elements; a three-dimensional model known as the subtracted model, which features the vascular elements alone, is determined; these two models are merged, weighting their voxels so as to increase the contrast between the images of the masked model and the images of the subtracted model; and summing the voxels thus weighted.

US 2004/0264752 A1 discloses a system and method for classifying voxels of first and second images generated using first and second echoes of a dual MRI scan, the first and second echoes corresponding to respective first and second sets of image acquisition parameters. The method includes the steps of providing for accessing first image data corresponding to the first image including an array of voxels, the first image data including a first associated parameter value S1 for a parameter of the imaging associated with respective voxels of the array of voxels; providing for accessing second image data corresponding to the second image including the array of voxels, the second image data including a second associated parameter value S2 for the parameter of the imaging associated with respective voxels of the array of voxels; and providing for determining R and theta values associated with respective voxels of the array of voxels.

US 6,895,107 B2 discloses a fully-automated method for segmentation of white matter, gray matter, and cerebral spinal fluid (CSF) and for calculating their respective volumes. The technique preferably uses a T2-weighted scan and a proton-density scan. The T2-weighted scans are used to highlight those portion of the brain corresponding to CSF. Thereafter, the proton density images are separated in CSF-containing and CSF-free portions, in accordance with the T2-weighted images. The CSF-free portion is then segmented into white matter and gray matter portions. The CSF-containing portion is further segmented into pure CSF-regions, and regions containing a mixture of gray and white matter and CSF. After CSF is segmented from this mixture, the white are gray matter and again segmented, and the respective volumes of white matter, gray matter, and CSF are calculated. A technique for determining a threshold gray scale value for segmenting the white and gray matter to assist in the visual identification of such regions is also disclosed.

## Summary of the Invention

The purpose of this invention is to identify the CSF boundaries in brain tissue from medical image, which can e.g. be used to identify edema. The preferred imaging modality is magnetic resonance imaging, but any modality with sufficient WM/GM/CSF contrast and resolution fine enough to represent the cortex (a few millimeters) will suffice. The method seeks to identify the voxels that primarily contain CSF (within the ventricles, surgical resection cavities, and some sulci), and also voxels containing the cortical surface even when the voxel's volume primarily contains gray matter (thin sulci).

This invention can improve on existing methods in two different ways. First, RF inhomogeneities can be minimized by using at least two related image sequences in order to estimate and remove the bias term arising from the inhomogeneity. Second, multiple imaging modalities can be employed in order to identify white matter even in the presence of pathological conditions. MR diffusion tensor imaging is particularly sensitive to variations in cell topology and is thus preferred for this task.

The invention requires medical images with contrast between the white matter, gray matter, and CSF. In previous methods, this is usually taken to be a single three-dimensional MRI volume. We propose a new method that requires two similar MRI volumes with preferably only a single, but optional two or more varied acquisition parameters to obtain different WM/GM/CSF contrast levels. It is assumed that the gain field arising from magnetic susceptibility and RF field inhomogeneity will be similar in the two volumes. By taking the ratio of the two volumes, the common gain factor can be eliminated. Furthermore, by carefully selecting the acquisition parameters, the WM/GM/CSF contrast can be increased with respect to the individual volumes. This method improves the performance of the remainder of the method, but is not a requirement. Some low-frequency distortion may remain after this approach, but it will be addressed in the next step.

In the next step, WM, GM, and CSF are classified by thresholding. Remaining low-frequency bias is detected and normalized in this step also, using a new technique. Iterative normalization and classification algorithms generally look at the sets of values of each type within a region of the volume, and base the gain estimation on these sets; see W.M. Wells, W.E. Grimson, R. Kikinis, F.A. Jolesz, "Adaptive Segmentation of MRI Data," IEEE Trans. Med. Imaging, v. 15, pp. 429-442, 1996. This can be complicated and time-consuming because the entire set of voxels is used in the procedure. Preferably the inventive method instead looks only at the WM/GM/CSF boundaries, as defined by the current threshold and normalization, and selects a gain correction that tends to place the boundaries over edges in the image.

Thin sulcal CSF boundaries are often too narrow to be directly detected in any common MR sequence. According to an aspect, the invention focuses on reliable detection of the cortical gray matter, which is much more robust, and then uses a 'skeletonizing' algorithm to locate the thin sulcal boundaries centered in a fold of cortical gray matter, similar to X. Han, C. Xu, D. Tosun, and J. Prince, "Cortical Surface Reconstruction Using a Topology Preserving Geometric Deformable Model," 5th IEEE Workshop on Math. Methods in Bio. Image Anal., Kauai, HI, pp. 213-220, Dec. 2001. Thicker areas of CSF will not be completely covered by the skeleton, but these are usually detected in by thresholding in the previous step, since thick enough CSF is usually easy to distinguish.

## Detailed Description of the Invention

The CSF boundary detection procedure consists of the following steps:

  1. Image pair pre-processing to enhance contrast and reduce bias (optional).

  2. WM/GM/CSF thresholded classification / inhomogeneity correction.

  3. Thin sulcus detection using the gray matter skeleton.

These steps are described in detail below.

1. Image pair pre-processing

Two MRI volumes are acquired using identical acquisition parameters, varying just one acquisition parameter. These two volumes are co-registered, if necessary, using standard methods. Then the ratio of the two volumes is taken. (Divisions by zero are replaced with the value zero.) Taking the ratio of the two volumes has two advantages. First, intensity variations due to field inhomogeneities tend to be similar in both images, so the division tends to normalize this undesirable effect away. Second, when the acquisition parameters are chosen correctly, the GM/WM separation is enhanced compared to a single MR acquisition.

The preferred MRI sequence for brain tissue classification is a 3D Spoiled Gradient Recalled Echo (SPGR). The signal can be modeled by the following equation (ignoring noise and inhomogeneity):

$$ S = K * PD * (1 - e^{-TR/T1}) \sin(FA) / (1 - (\cos(FA)\, e^{-TR/T1})), $$

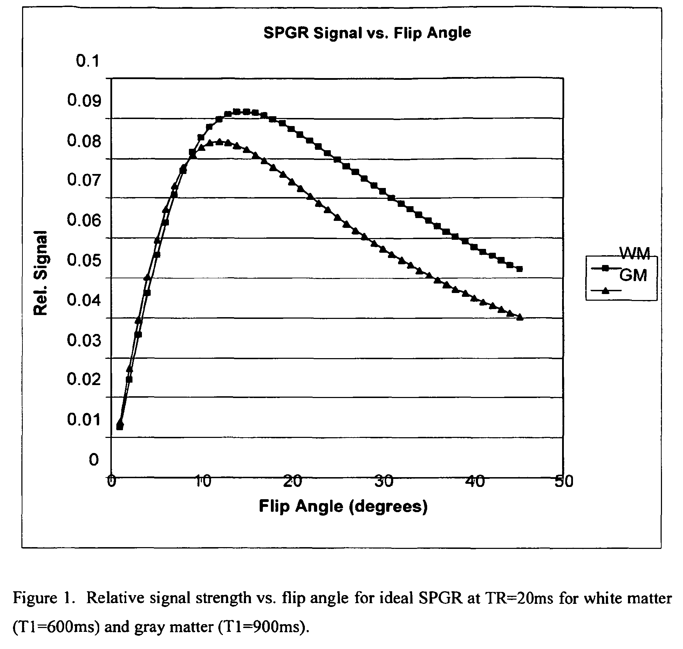

where T1 and PD depend upon the tissue properties, while the repetition time (TR) and flip angle (FA) are controlled parameters of the acquisition. Variable K incorporates several constant factors, including functions of the echo time (TE) and the tissue T2. In the SPGR volumes, the tissue T1 and proton density (PD) both contribute significantly to the signal levels. For flip angles above the Ernst angle (angle that maximizes the signal), the lower T1 of white matter typically accounts for a 30-40 % elevation of the white matter signal relative to gray matter. However, the PD of white matter is about 88% of gray matter, so the relative WM signal is about 14-23 % higher than GM. Below the Ernst angle, images are PD-weighted, and relatively insensitive to WM/GM T1 variations (see the plot, Fig. 1).

In this method, two SPGR volumes are acquired: **A**, with a flip angle above the Ernst angle, and **B,** with a flip angle below the Ernst angle for the range of T1 of WM and GM tissues. Then the ratio of the two volumes, **A/B** is computed. In this volume, the PD weighting is removed, and the signal variation between WM and GM is due mainly to the T1 differences, 30-40 %.

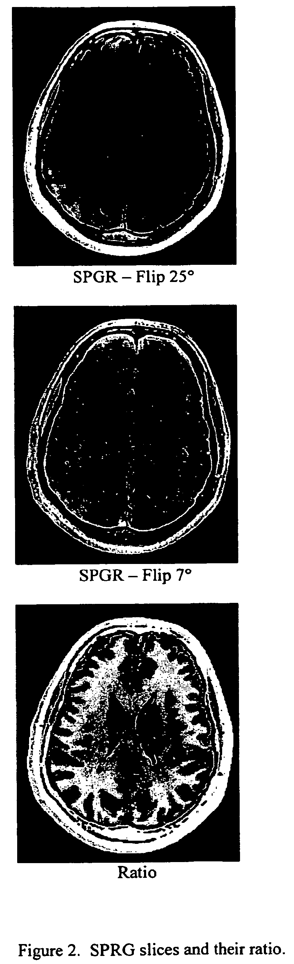

Figure 2 compares a slice of the low flip angle SPGR, the high flip angle SPGR, and their ratio. The ratio displays a strong separation between white and gray matter, and the CSF where thick enough is also separated from the gray value. The typical intensity inhomogeneity is easy to observe in the 25 degree flip angle image, in which the intensities are skewed lower in the middle of the image and brighter near the outer edges.

Gray-white contrast enhancement can be obtained using spin echo based T1-weighted sequences also, by varying the repetition time, TR, to modify the T1-weighting. Spin echo signal response is generally modeled as:

$$S = K * PD * (1-e^{-TR/T1}),$$

again lumping all of the constant factors into K. By selecting one TR near the tissue T1, and a second TR several times larger than the average T1, we obtain T1-weighted and PD weighted volumes with response similar to that shown in Fig. 2. Their ratio gives a similarly enhanced gray-white contrast. Spin-echo sequences are far less prone to the inhomogeneities inherent in SPGR. But if acquired using surface coils, the variability in the coil's RF reception can produce significant low frequency variations that are normalized by this method.

2. WM/GM/CSF thresholded classification / inhomogeneity correction.

The gray/white threshold can be set by asking the user to select a set of sample points in the user interface, e.g. to 'paint' a region by modeling the set of values underlying the selected gray or white matter region as a Gaussian distribution, it is easy to extract a mean and standard deviation for that region. This input should be accepted for white, gray, and CSF. From white and gray values, a WM-GM threshold is calculated as the point at which the two Gaussian distribution curves intersect (i.e., the value at which a point is equally likely to be white or gray matter). A GM-CSF threshold is computed in the same manner.

The initial threshold value is a first approximation to the optimal threshold value, but it may not be ideal. Furthermore, even after normalization, there may be some remaining variation in WM/GM/CSF mean intensities across the image.

A low frequency gain field G is estimated to correct these variations. The gain volume can be at a much coarser resolution than the image. Approximately 1 cm resolution is appropriate for G, about a factor of ten coarser than the image volume.

Prior methods estimate the gain from the thresholded image by looking at the statistics of the sets of voxels in each of the three categories; see W.M. Wells, W.E. Grimson, R. Kikinis, F.A. Jolesz, "Adaptive Segmentation of MRI Data," IEEE Trans. Med Imaging, v. 15, pp. 429-442, 1996. Gain adjustments that center the statistics of local sub-regions towards the global value are specified. The inventive method instead concentrates on aligning the boundaries between the sub-regions. The boundaries in the original volume can be detected by any standard three-dimensional edge detection operation. In the preferred implementation, the magnitude of the gradient of the image volume is computed. A classification volume is formed by assigning integers 0, 1, 2 to CSF, GM, and WM regions determined by thresholding. An edge detection of the classification volume is then computed. A measure of the quality of the match of the boundaries of the image and classification volumes is then defined. The mutual information measure is well suited for this purpose (see P. Viola and W. M. Wells III, "Alignment by Maximization of Mutual Information," in Intl. Conf. on Comp. Vision, E. Grimson, S. Shafer, A. Blake, and K. Sugihara, Eds., IEEE Computer Society Press, Los Alamitos, CA, pp. 16-23, 1995 for the computation of the mutual information for volume registration). Simpler measures are also acceptable, such as a normalized sum of the product of the two volumes:

$$\frac{\sum_{x,y,z} i_{x,y,z} \cdot c_{x,y,z}}{\sum_{x,y,z} c_{x,y,z}}$$

Symbol $i$ denotes the value of voxel position (x,y,z) of the edge-detected image volume, normalized by the current gain, and c denotes the value of the edge-detected classification volume.

The gain field is adjusted to maximize the mutual information or other similarity measure. Gradient descent is suitable for this optimization procedure, since the starting point is generally close to the optimal. Furthermore, the change in the measure can be computed far more rapidly than the measure itself, since the effect of one gain field voxel is limited to a small sub-volume of the image field.

3. Thin sulcus detection

Classification will adequately identify the WM/GM/CSF regions that are large relative to the image resolution. The method proposed by X. Han, C. Xu, D. Tosun, and J. Prince, "Cortical Surface Reconstruction Using a Topology Preserving Geometric Deformable Model," 5th IEEE Workshop on Math. Methods in Bio. Image Anal., Kauai, HI, pp. 213-220, Dec. 2001, is used at this step to locate cortical surfaces in thin sulci using a skeleton computation. The GM skeleton is the set of points of maximal distance from the WM-GM boundary, which tends to be precisely the location of a thin cortical surface in the sulcal fold of cortical gray. First, a signed distance map from the WM-GM boundary is computed. The Laplacian of the distance map is computed, and Laplacian values above a fixed threshold are classified as cortical surface.

The inventive method may lack the sub-pixel accuracy of the level set approach, but is simpler and faster. Preferably all CSF-containing voxels are marked, and the sub-pixel accuracy is unnecessary in this application. A refinement to this method is to limit the maximum distance that the skeleton is allowed to traverse. If we assume that the cortical GM-CSF surface is always within some maximum distance (several millimeters) of the cortical WM-GM boundary, then points at greater distance are not considered. This eliminates many false positive skeleton values from deep brain gray matter structures.

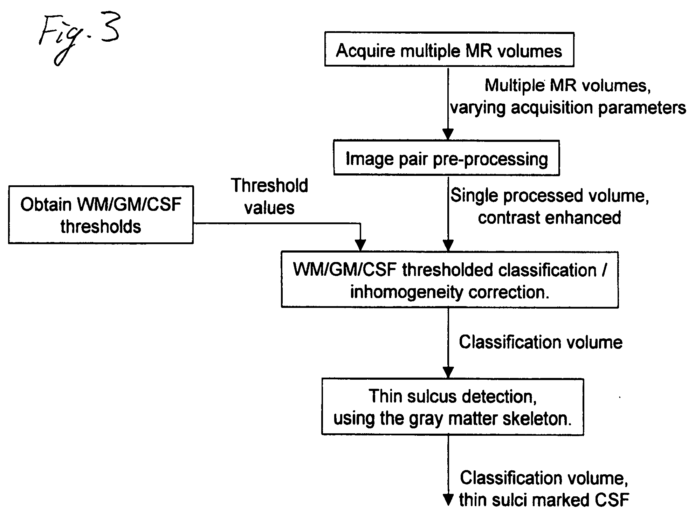

Fig. 3 shows the structure of the inventive apparatus.

Different imaging modalities have different advantages and disadvantages. E.g. from images acquired with MRI (Magnetic Resonance Imaging) grey and white matter of brain tissue can easily be distinguished. But the spatial resolution and spatial accuracy is worse compared to images acquired with CT (Computer Tomography). But from CT images it is quite difficult to distinguish between grey and white matter.

Usually in T1-weighted (T1w) MR images a sufficient spatial resolution can be reached but water, especially edema, can hardly be seen. T2-weighted (T2w) images can be used to identify regions of CNF (Cerebro-Spinal Fluid). A very sufficient imaging dataset to identify edema can be calculated from diffusion weighted (DWI) MR images or from the diffusion tensor (DTI) using the fact that the anisotropy in the movement of water molecules will decrease in edema regions. But DWI images currently suffer from a low spatial resolution and accuracy.

For a highly reliable segmentation of brain surfaces this invention takes all advantages from the various imaging modalities and combines it.

For example, if T1w and T2w data sets are morphed and fused to the CT data, the T2w dataset can be used for detection of outer surfaces and the T1w dataset can be used to distinguish between white and grey matter. From those datasets a new dataset (DS1) can be created showing the boundaries between CSF and white and grey matter. If the DWI dataset is fused and morphed to the CT dataset, a new (DWI1) dataset is created showing diffusion related data in an anatomical correct environment. DWI1 can be used to identify edema. This information can be fused to DS 1 creating a new dataset DS2 that contains anatomical correct information about boundaries between grey and white matter, brain surfaces and edema. In the same manner more datasets containing more information can be used to identify more required regions.

Furthermore datasets can be used to correct for image inhomogenieties or other imaging errors. E.g. distortions from phase errors can be corrected by using field maps and the corrected images can be used to correct the other data sets.

**Claims**

1.    A method of medical image acquisition and image processing to classify tissue types (WM, GM, CSF) in images of brain tissue, comprising the steps of:

   a) generating at least two data sets or data volumes by magnetic resonance imaging (MRI), wherein

      a1) an identical volume is at least partly covered,
      a2) at least one acquisition parameter is varied to obtain different contrast levels relating to different tissue types in the respective at least two (MRI) data sets or volumes, and
      a3) the acquisition parameter(s) is/are respectively selected to optimise the contrast between two different substance or tissue types (WM; GM) in one (MRI) data set and between two different substance or tissue types (CSF; WM) in a different (MRI) data set;

   b) calculating a ratio of the two volumes and displaying the ratio in a ratio image to increase the tissue contrast between different tissue types (WM, GM, CSF) in the ratio image;
   c) determining the thresholding values by modelling sets of values underlying sample tissue type regions (WM, GM, CSF) as Gaussian distributions and calculating the thresholds as the points at which Gaussian distributions of different tissue-type regions intersect; and

d) processing the ratio image to classify the tissue types (WM, GM, CSF) by thresholding.

2. The method according to claim 1, wherein a single acquisition parameter is varied to generate the at least two (MRI) data sets, preferably to enhance the T1 contrast and/or to normalize artefacts.

3. The method according to one of the preceding claims, wherein the varied acquisition parameter is the flip angle, preferably to be set above and below the Ernst angle.

4. The method according to one of the preceding claims, wherein the ratio of the different (MRI) data sets is calculated.

5. The method according to one of the preceding claims, wherein the at least one acquisition parameter is varied to optimise the data acquisition in respect of the distinction of white matter (WM) and grey matter (GM) in a first data set.

6. The method according to one of the preceding claims, wherein the at least one acquisition parameter is varied to optimise the data acquisition in respect of the distinction of white matter (WM) and cerebrospinal fluid (CSF) filled regions in a second data set.

7. The method according to one of the preceding claims, wherein white matter, gray matter and cerebrospinal fluid (CSF) filled regions are classified by thresholding.

8. The method of one of the preceding claims, wherein the white mater (WM), grey matter (GM) and/or cerebrospinal fluid (CSF) boundaries are calculated from the at least two (MRI) data sets.

9. The method of one of the preceding claims, wherein a skeletonizing algorithm is used to locate the thin sulcal boundaries.

10. The method of one of the foregoing claims in which applying a method of obtaining physical, physiological or anatomical information or processing contains the segmentation of pathological structures, white matter, grey matter, functional areas, or surfaces.

11. The method of one of the foregoing claims in which output data is considered for input into subsequent image processing methods by means of subtraction, transformation, multiplication, division, addition, or statistical evaluation.

12. The method of one of the foregoing claims in which output data is considered for input into subsequent image processing methods by means of masking, filtering, translation, integration, differentiation, derivation, or operation.

13. The method of one of the foregoing claims in which the geometrical relation between the input datasets is used to co-register the various input data sources with each other.

14. The method of one of the foregoing claims in which the geometrical relation between the input datasets is used to co-register output information with image datasets and/or with other outputs.

15. The method of one of the foregoing claims in which the image processing involves the inclusion of assumptions or estimates or a predefined atlas about the anatomical structures and/or physiological properties of one or more volume elements based on an assignment using image data.

16. The method of any of the foregoing claims in which the image processing involves the use of a diffusion tensor MRI.

17. The method of any of the forgoing claims in which input data contains an MRI image with a spatial resolution of one by one by three millimeters or finer.

18. The method of any of the foregoing claims in which MRI sequences with varying flip angles are used.

19. The method of one of the foregoing claims in which the end result of the process is a description or definition of surface contours, especially between brain tissue and cerebrospinal fluid (CSF).

**20.** Computer program which, when loaded and running on a computer, performs a method of one of the preceding claims.

**21.** Program storage medium or computer program product comprising a program of the preceding claim.

**22.** Apparatus for medical image processing

- comprising an MRI-system to generate at least two data sets or data volumes by magnetic resonance imaging (MRI), wherein at least partly an identical volume is covered, at least one acquisition parameter is varied to obtain different contrast levels relating to different tissue types in the respective at least two (MRI) data sets or volumes, and
- comprising a computer to select the acquisition parameter(s) to optimise the contrast between two different substance or tissue types (WM; GM) in one (MRI) data set and between two different substance or tissue types (CSF; WM) in a different (MRI) data set, to calculate a ratio of the two volumes and display the ratio in a ratio image to increase the tissue contrast between different tissue types (WM, GM, CSF) in the ratio image, to determine the thresholding values by modelling sets of values underlying sample tissue type regions (WM, GM, CSF) as Gaussian distributions and calculating the thresholds as the points at which Gaussian distributions of different tissue-type regions intersect and to process the ratio image to classify the tissue types (WM, GM, CSF) by thresholding.

**Patentansprüche**

**1.** Verfahren zur medizinischen Bilderfassung und Bildverarbeitung, um Gewebearten (WM, GM, CSF) in Bildern von Gehirngewebe zu klassifizieren, mit den Schritten:

a) Erzeugen von wenigstens zwei Datensätzen oder Datenvolumina durch Magnetresonanztomografie (MRT [magnetic resonance imaging-MRI]), wobei

a1) ein identisches Volumen wenigstens teilweise abgedeckt ist,
a2) wenigstens ein Erfassungsparameter verändert wird, um unterschiedliche Kontrastpegel bezüglich der unterschiedlichen Gewebearten in den jeweiligen wenigstens zwei MRT-Datensätzen oder -volumina zu erhalten, und
a3) der/die Erfassungsparameter jeweils ausgewählt wird/werden, um den Kontrast zwischen zwei unterschiedlichen Substanz- oder Gewebearten (WM; GM) in einem MRT-Datensatz und zwischen zwei unterschiedlichen Substanz- oder Gewebearten (CSF; WM) in einem anderen MRT-Datensatz zu optimieren;

b) Berechnen eines Verhältnisses zwischen den zwei Volumina und Anzeigen des Verhältnisses in einem Verhältnisbild, um den Gewebekontrast zwischen unterschiedlichen Gewebearten (WM, GM, CSF) in dem Verhältnisbild zu erhöhen;
c) Bestimmen der Schwellenwerte durch Modellieren von Wertsätzen, die Gewebeartbereichen (WM, GM, CSF) von Proben als Gaußsche Verteilungen unterliegen, und Berechnen der Schwellenwerte als die Punkte, an denen sich Gaußsche Verteilungen von unterschiedlichen Gewebeartbereichen schneiden, und
d) Verarbeiten des Verhältnisbildes, um die Gewebearten (WM, GM, CSF) durch Schwellenwertbildung zu klassifizieren.

**2.** Verfahren nach Anspruch 1, wobei ein einzelner Erfassungsparameter verändert wird, um wenigstens zwei MRT-Datensätze zu erzeugen, vorzugsweise um den T1 Kontrast zu erhöhen und/oder Artefakte zu normalisieren.

**3.** Verfahren nach einem der vorhergehenden Ansprüche, wobei der veränderte Erfassungsparameter der Flipwinkel ist, der vorzugsweise über und unter dem Ernstwinkel einzustellen ist.

**4.** Verfahren nach einem der vorhergehenden Ansprüche, wobei das Verhältnis der unterschiedlichen MRT-Datensätze berechnet wird.

**5.** Verfahren nach einem der vorhergehenden Ansprüche, wobei der wenigstens eine Erfassungsparameter verändert wird, um die Datenerfassung in Hinsicht auf die Unterscheidung von Weißer Materie (WM) und Grauer Materie (GM) in einem ersten Datensatz zu optimieren.

**6.** Verfahren nach einem der vorhergehenden Ansprüche, wobei der wenigstens eine Erfassungsparameter verändert wird, um die Datenerfassung in Hinsicht auf die Unterscheidung von Weißer Materie (WM) und mit zerebrospinaler bzw. Hirn-Rückenmarkflüssigkeit (cerebrospinal fluid - CSF) gefüllten Bereichen in einem zweiten Datensatz zu optimieren.

**7.** Verfahren nach einem der vorhergehenden Ansprüche, wobei Weiße Materie, Graue Materie und mit zerebrospinaler Flüssigkeit (CSF) gefüllte Bereiche durch Schwellenwertermittlung klassifiziert werden.

**8.** Verfahren nach einem der vorhergehenden Ansprüche, wobei Weiße Materie (WM), Graue Materie (GM) und/oder die Grenzen der zerebrospinalen Flüssigkeit anhand der wenigstens zwei MRT-Datensätze berechnet werden.

**9.** Verfahren nach einem der vorhergehenden Ansprüche, wobei ein Skelettierungsalgorithmus verwendet wird, um die dünnen Sulkusgrenzen zu orten.

**10.** Verfahren nach einem der vorhergehenden Ansprüche, in dem die Anwendung eines Verfahrens zum Erreichen physischer, physiologischer oder anatomischer Informationen oder der Verarbeitung die Segmentierung von pathologischen Strukturen, Weißer Materie, Grauer Materie, funktionalen Bereichen oder Oberflächen beinhaltet.

**11.** Verfahren nach einem der vorhergehenden Ansprüche, in dem Ausgangsdaten für die Eingabe in anschließende Bildverarbeitungsverfahren mittels Subtraktion, Umwandlung, Multiplikation, Division, Addition oder statistische Auswertung berücksichtigt werden.

**12.** Verfahren nach einem der vorhergehenden Ansprüche, in dem Ausgangsdaten für die Eingabe in anschließende Bildverarbeitungsverfahren mittels Maskierung, Filtern, Umrechnen, Integration, Differenzierung, Herleitung oder Operation berücksichtigt werden.

**13.** Verfahren nach einem der vorhergehenden Ansprüche, in dem das geometrische Verhältnis zwischen den Eingangsdatensätzen verwendet wird, um die verschiedenen Eingangsdatenquellen mit einander anzupassen.

**14.** Verfahren nach einem der vorhergehenden Ansprüche, in dem das geometrische Verhältnis zwischen den Eingangsdatensätzen verwendet wird, um die Ausgangsinformationen mit Bilddatensätzen und/oder mit anderen Ausgaben anzupassen.

**15.** Verfahren nach einem der vorhergehenden Ansprüche, in dem die Bildverarbeitung die Einbeziehung von Vermutungen oder Schätzungen oder eines vordefinierten Atlasses über die anatomischen Strukturen und/oder physiologischen Eigenschaften von einem oder mehreren Volumenelementen auf der Basis einer Zuordnung mittels Bilddaten einschließt.

**16.** Verfahren nach einem der vorhergehenden Ansprüche, in dem die Bildverarbeitung die Verwendung eines Diffusions-Tensors MRT einschließt.

**17.** Verfahren nach einem der vorhergehenden Ansprüche, in dem die Eingangsdaten eine MRT-Abbildung mit einer räumlichen Auflösung von einem mal einem mal drei Millimeter oder feiner beinhalten.

**18.** Verfahren nach einem der vorhergehenden Ansprüche, in dem MRT-Abfolgen mit variierenden Flipwinkeln verwendet werden.

**19.** Verfahren nach einem der vorhergehenden Ansprüche, in dem das Endresultat des Prozesses eine Beschreibung oder Definition von Oberflächenkonturen, speziell zwischen Gehirngewebe und zerebrospinaler Flüssigkeit (CSF) ist.

**20.** Computerprogramm, das ein Verfahren nach einem der vorhergehenden Ansprüche durchführt, wenn es geladen ist und auf einem Computer arbeitet.

**21.** Programmspeichermedium oder Computerprogrammprodukt mit einem Programm nach dem vorhergehenden Anspruch.

**22.** Vorrichtung zur medizinischen Bildverarbeitung

- mit einem MRT-System, um wenigstens zwei Datensätze oder Datenvolumina durch Magnetresonanztomografie (MRT) zu erzeugen, wobei wenigstens teilweise ein identisches Volumen abgedeckt wird, wobei wenigstens ein Erfassungsparameter verändert wird, um unterschiedliche Kontrastpegel bezüglich unterschiedlicher Gewebearten in den jeweiligen wenigstens zwei MRT-Datensätzen oder-volumina zu erhalten, und

- mit einem Computer, um den/die Erfassungsparameter auszuwählen, um den Kontrast zwischen zwei unterschiedlichen Substanz- oder Gewebearten (WM; GM) in einem MRT-Datensatz und zwischen zwei unterschiedlichen Substanz- oder Gewebearten (CSF; WM) in einem anderen MRT-Datensatz zu optimieren, um ein Verhältnis der zwei Volumina zu berechnen und das Verhältnis in einem Verhältnisbild anzuzeigen, um den Gewebekontrast zwischen unterschiedlichen Gewebearten (WM; GM; CSF) in dem Verhältnisbild zu erhöhen, um die Schwellenwerte durch Modellieren von Wertsätzen, die Gewebeartbereichen (WM, GM, CSF) von Proben als Gaußsche Verteilungen unterliegen, zu bestimmen, wobei die Schwellenwerte als die Punkte berechnet werden, an denen sich Gaußsche Verteilungen von unterschiedlichen Gewebeartbereichen schneiden, und um das Verhältnisbild zu verarbeiten, um die Gewebearten (WM, GM, CSF) durch Schwellenwertbildung zu klassifizieren.

## Revendications

1. Procédé d'acquisition d'image médicale et de traitement d'image afin de classer des types de tissu (WM, GM, CSF) dans des images de tissu cérébral, comportant les étapes consistant à :

   a) générer au moins deux ensembles de données ou volumes de donnés par imagerie par résonance magnétique (IRM), où

   a1) un volume identique est au moins partiellement couvert,
   a2) au moins un paramètre d'acquisition est varié afin d'obtenir différents niveaux de contraste pour différents types de tissu dans les au moins deux ensembles ou volumes de données IRM respectifs, et
   a3) le/les paramètre(s) d'acquisition est/sont respectivement sélectionné(s) de manière à optimiser le contraste entre deux substances ou types de tissu (WM ; GM) différents dans un ensemble de données IRM et entre deux substances ou types de tissu (CSF ; WM) différents dans un autre ensemble de données IRM ;

   b) calculer un ratio entre les deux volumes et représenter le ratio dans une image de ratio afin d'augmenter le contraste tissulaire entre différents types de tissu (WM, GM, CSF) dans l'image de ratio ;
   c) déterminer les valeurs de seuillage en modélisant des ensembles de valeurs sous-tendant des échantillons de régions de types de tissu (WM, GM, CSF) sous forme de répartitions gaussiennes et calculer les seuils en tant que points d'intersection entre les répartitions gaussiennes de différentes régions de types de tissu ; et
   d) traiter l'image de ratio afin de classer les types de tissu (WM, GM, CSF) par seuillage.

2. Procédé selon la revendication 1, où un unique paramètre d'acquisition est varié afin de générer les au moins deux ensembles de données IRM, de préférence afin de renforcer le contraste T1 et/ou pour normaliser des artéfacts.

3. Procédé selon l'une quelconque des revendications précédentes, où le paramètre d'acquisition varié est l'angle de bascule, de préférence de manière à ce qu'il soit supérieur ou inférieur à l'angle de Ernst.

4. Procédé selon l'une quelconque des revendications précédentes, où le ratio des différents ensemble de données IRM est calculé.

5. Procédé selon l'une quelconque des revendications précédentes, où l'au moins un paramètre d'acquisition est varié afin d'optimiser l'acquisition des données en ce qui concerne la distinction entre la matière blanche (WM) et la matière grise (GM) dans un premier ensemble de données.

6. Procédé selon l'une quelconque des revendications précédentes, où l'au moins un paramètre d'acquisition est varié afin d'optimiser l'acquisition des données en ce qui concerne la distinction entre la matière blanche (WM) et des régions remplies de liquide cérébro-spinal (CSF) dans un second ensemble de données.

7. Procédé selon l'une quelconque des revendications précédentes, où la matière blanche, la matière grise et les régions remplies de liquide cérébro-spinal (CSF) sont classées par seuillage.

**8.** Procédé selon l'une quelconque des revendications précédentes, où les frontières de la matière blanche (WM), de la matière grise (GM) et/ou du liquide cérébro-spinal (CSF) sont calculées à partir des au moins deux ensembles de données IRM.

**9.** Procédé selon l'une quelconque des revendications précédentes, où un algorithme de squelettisation est utilisé pour localiser les fines frontières formées par les sillons.

**10.** Procédé selon l'une quelconque des revendications précédentes, dans lequel l'utilisation d'un procédé d'obtention ou de traitement d'informations physiques, physiologiques ou anatomiques inclut la segmentation de structures pathologiques, de matière blanche, de matière grise, de régions fonctionnelles ou de surfaces.

**11.** Procédé selon l'une quelconque des revendications précédentes, où des données de sortie sont considérées en vue de leur introduction dans des procédés de traitement d'image ultérieurs par soustraction, transformation, multiplication, division, addition ou évaluation statistique.

**12.** Procédé selon l'une quelconque des revendications précédentes, où des données de sortie sont considérées en vue de leur introduction dans des procédés de traitement d'image ultérieurs par masquage, filtrage, translation, intégration, différentiation, dérivation ou opération.

**13.** Procédé selon l'une quelconque des revendications précédentes, où la relation géométrique entre les ensembles de données d'entrée est utilisée pour co-recaler les diverses sources de données d'entrée.

**14.** Procédé selon l'une quelconque des revendications précédentes, où la relation géométrique entre les ensembles de données d'entrées est utilisée pour co-recaler des informations de sortie avec des ensembles de données d'image et/ou d'autres sorties.

**15.** Procédé selon l'une quelconque des revendications précédentes, où le traitement d'image implique l'inclusion d'hypothèses ou d'estimations ou un atlas prédéfini des structures anatomiques et/ou de propriétés physiologiques d'un ou plusieurs éléments de volume sur la base d'une tâche utilisant des données d'image.

**16.** Procédé selon l'une quelconque des revendications précédentes, où le traitement d'image implique l'utilisation d'un IRM du tenseur de diffusion.

**17.** Procédé selon l'une quelconque des revendications précédentes, où les données d'entrée contiennent une image IRM ayant une résolution spatiale d'un par un par trois millimètres ou plus fine.

**18.** Procédé selon l'une quelconque des revendications précédentes, où des séquences IRM avec des angles de bascule variables sont utilisées.

**19.** Procédé selon l'une quelconque des revendications précédentes, où le résultat final du processus est une description ou une définition de contours de surfaces, en particulier entre le tissu cérébral et le liquide cérébro-spinal (CSF).

**20.** Programme d'ordinateur qui, lorsqu'il est chargé et exécuté sur un ordinateur, exécute un procédé selon l'une quelconque des revendications précédentes.

**21.** Support de stockage de programme ou produit de programme d'ordinateur comportant un programme selon la revendication précédente.

**22.** Appareil de traitement d'image médicale

- comportant un système IRM pour générer au moins deux ensembles de données ou volumes de données par imagerie par résonance magnétique, où un volume au moins partiellement identique est recouvert, au moins un paramètre d'acquisition est varié afin d'obtenir différents niveaux de contraste pour différents types de tissu dans les au moins deux ensembles ou volumes de données IRM respectifs, et
- comportant un ordinateur pour sélectionner le/les paramètre(s) d'acquisition de manière à optimiser le contraste entre deux substances ou types de tissu (WM ; GM) différents dans un ensemble de données IRM et entre deux substances ou types de tissu (CSF ; WM) différents dans un autre ensemble de données IRM, calculer un ratio entre les deux volumes et représenter le ratio dans une image de ratio afin d'augmenter le contraste tissulaire entre différents types de tissu (WM, GM, CSF) dans l'image de ratio, déterminer les valeurs de seuillage en modélisant des ensembles de valeurs sous-tendant des échantillons de régions de types de tissu (WM, GM, CSF) sous forme de répartitions gaussiennes et calculer les seuils en tant que points d'intersection entre les répartitions gaussiennes de différentes régions de types de tissu et traiter l'image de ratio afin de classer les types de tissu (WM, GM, CSF) par seuillage.

Figure 1. Relative signal strength vs. flip angle for ideal SPGR at TR=20ms for white matter (T1=600ms) and gray matter (T1=900ms).

SPGR – Flip 25°

SPGR – Flip 7°

Ratio

Figure 2. SPRG slices and their ratio.

*Fig. 3*

```
                              ┌─────────────────────────────┐
                              │   Acquire multiple MR volumes │
                              └─────────────────────────────┘
                                            │
                                     Multiple MR volumes,
                                   varying acquisition parameters
                                            │
                                            ▼
                              ┌─────────────────────────────┐
                              │   Image pair pre-processing  │
                              └─────────────────────────────┘
```

Threshold
values

┌──────────────────────┐
│  Obtain WM/GM/CSF    │
│    thresholds        │
└──────────────────────┘

Single processed volume,
contrast enhanced

┌──────────────────────────────────────┐
│  WM/GM/CSF thresholded classification / │
│      inhomogeneity correction.         │
└──────────────────────────────────────┘

Classification volume

┌──────────────────────────────────────┐
│       Thin sulcus detection,           │
│   using the gray matter skeleton.      │
└──────────────────────────────────────┘

Classification volume,
thin sulci marked CSF

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1253557 A1
- US 20030169914 A1
- US 20040264752 A1
- US 6895107 B2

**Non-patent literature cited in the description**

- **M. KASS ; A. WITKIN ; D. TERZOPOULOS.** Snakes: Active Contour Models. *Intl. J. Compo Vision,* 1988, vol. 1, 312-333
- **X. ZENG ; L.H. STAIB ; R.T. SHULTZ ; J.S. DUNCAN.** Segmentation and Measurement of the Cortex from 3D MR Images Using Coupled Surfaces Propagation. *IEEE Trans. Med. Imaging,* 1999, vol. 18, 100-111
- **W.M. WELLS ; W.E. GRIMSON ; R. KIKINIS ; F.A. JOLESZ.** Adaptive Segmentation of MRI Data. *IEEE Trans. Med Imaging,* 1996, vol. 15, 429-442
- **X. HAN ; C. XU ; D. TOSUN ; J. PRINCE.** Cortical Surface Reconstruction Using a Topology Preserving Geometric Deformable Model. *IEEE Workshop on Math. Methods in Bio. Image Anal.,* December 2001, 213-220
- **W.M. WELLS ; W.E. GRIMSON ; R. KIKINIS ; F.A. JOLESZ.** Adaptive Segmentation of MRI Data. *IEEE Trans. Med. Imaging,* 1996, vol. 15, 429-442
- **X. HAN ; C. XU ; D. TOSUN ; J. PRINCE.** Cortical Surface Reconstruction Using a Topology Preserving Geometric Deformable Model. *IEEE Workshop on Math. Methods in Bio. Image Anal.,* 2001, 213-220
- Alignment by Maximization of Mutual Information. **P. VIOLA ; W. M. WELLS III.** Intl. Conf. on Comp. Vision. IEEE Computer Society Press, 1995, 16-23